(19) Europäisches Patentamt
European Patent Office
Office européen des brevets

(11) Publication number: **0 371 242 A2**

(12) # EUROPEAN PATENT APPLICATION

(21) Application number: 89119207.2

(22) Date of filing: 17.10.89

(51) Int. Cl.[5]: C09D 163/00, C09D 161/04, C09D 161/20, //(C09D163/00, 161:04,161:20),(C09D161/04, 163:00,161:20),(C09D161/20, 163:00,161:04)

(30) Priority: 25.10.88 US 262379

(43) Date of publication of application: 06.06.90 Bulletin 90/23

(84) Designated Contracting States: AT BE CH DE ES FR GB IT LI NL SE

(71) Applicant: THE DOW CHEMICAL COMPANY
2030 Dow Center Abbott Road P.O. Box 1967
Midland Michigan 48640-1967(US)

(72) Inventor: Whiteside, Ross C., Jr.
Route 1 Box 98 County Road 687
Angleton Texas 77515(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) **Coating composition.**

(57) Substrates are coated with a composition comprising (A) a low molecular weight epoxy resin; (B) a phenolic hydroxyl-containing compound; (C) a converting resin such as a urea-formaldehyde resin; (D) a catalyst or accelerator; and (E) a flow modifier. The obtained substrates are particularly useful for making electrical laminates.

EP 0 371 242 A2

# COATING COMPOSITION

The present invention concerns coating compositions containing a low molecular weight epoxy resin, a phenolic hydroxyl-containing compound, a converting resin and an acidic catalyst and to a method for coating substrates.

Epoxy resin coatings have very desirable properties. Usually, the higher the molecular weight epoxy resins result in coatings having better properties than coating compositions prepared from lower epoxy resins. However, the higher molecular weight epoxy resins are either solids or highly viscous liquids resulting in the requirement for large amounts of solvent which is environmentally undesirable. P. H. Martin in U. S. Patents 3,931,109 and 4,322,456 disclose coating substrates with a coating composition comprising a low molecular weight epoxy resin, a phenolic hydroxyl-containing compound and a basic catalyst for effecting the reaction between the epoxy resin and the phenolic hydroxyl-containing compound. When these compositions are applied to the surface of a substrate and heated, they are advanced to a high molecular weight in situ on the surface of the substrate. This provided for coatings having reduced solvent requirements. These compositions did not contain any converting resin for the epoxy resin.

Coating compositions derived from low molecular weight epoxy resins such as the diglycidyl ethers of bisphenol A having epoxide equivalent weights of from 525 to 825 have certain advantages over higher molecular weight epoxy resins such as the diglycidyl ethers of bisphenol A having equivalent weights of from 1800 to 4500. These advantages are low melt viscosity, reduced solvent requirements and good flowout. Although the aforementioned low molecular weight resins possess the enumerated advantages, they do, however, have some deficiencies such as reduced coating properties. The higher molecular weight epoxy resins result in coatings having increased solvent resistance, blush resistance, stain resistance, corrosion resistance, flexibility and hardness as compared to coatings prepared from the lower equivalent weight epoxy resins.

It would, therefore, be desirable to be able to apply coatings containing high molecular weight epoxy resins to substrates at suitable application viscosities but with reduced solvent or no solvent. Therefore, coatings possessing the advantages of both lower and higher molecular weight epoxy resins could be obtained.

The present invention provides a method for achieving coating compositions possessing the advantages of both such coating compositions by the in situ advancement of a relatively low molecular weight epoxy resin with a phenolic hydroxyl-containing compound in the presence of an aliphatic hydroxyl-containing converting resin and an acidic catalyst for catalyzing the reaction between the in situ advanced epoxy resin and the aliphatic hydroxyl-containing converting resin.

The present invention pertains to a coating composition comprising

(A) at least one relatively low molecular weight epoxy resin having an average of more than one, but not more than 2 vicinal epoxide groups per molecule;

(B) at least one phenolic hydroxyl-containing compound having an average of more than one, but not more than two phenolic hydroxyl groups per molecule;

(C) at least one converting resin or compound;

(D) a catalyst for reacting the converting resin with the advanced epoxy resin which results when component (A) is reacted with component (B) upon heating the composition at a temperature of 130°C and above; and

(E) at least one flow modifier; and wherein components (A) and (B) are present in amounts which provide a ratio of phenolic hydroxyl groups to vicinal epoxide groups of from 0.1:1 to 9:1; and component (C) is present in an amount of from 5 to 50 percent by weight based upon the combined weight of components (A), (B) and (C); component (D) is present in an amount of from 0.001 to 10 percent by weight based upon the combined weight of components (A), (B), (C) and (D); and component (E) is present in an amount of from 0.005 to 2 percent by weight based upon the combined weight of components (A), (B) and (C).

Another aspect of the present invention pertains to a method for applying to substrates coating compositions comprising (i) at least one relatively high molecular weight epoxy resin; and (ii) at least one converting resin which method comprises

(I) applying to the surface of a substrate, one or more applications of the above-mentioned coating composition

(II) heating the thus coated substrate to a temperature of at least 130°C for a time sufficient to cause reaction between components (A) and (B) and reaction of component (C) with the product resulting from the reaction between components (A) and (B).

Suitable relatively low molecular weight epoxy resins which can be employed herein include the diglycidyl ethers of compounds having an average of more than 1 but not more than 2 aromatic hydroxyl groups per molecule and preferably having epoxide equivalent weights of from 172 to 825. The suitable epoxy resins are those represented by the following formulas I or II

Formula I

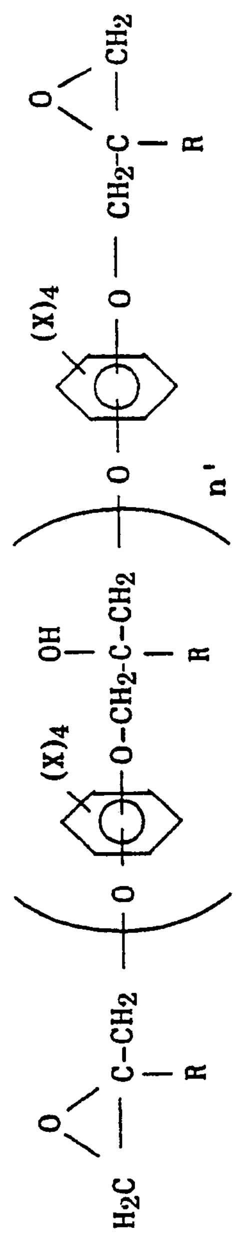

Formula II

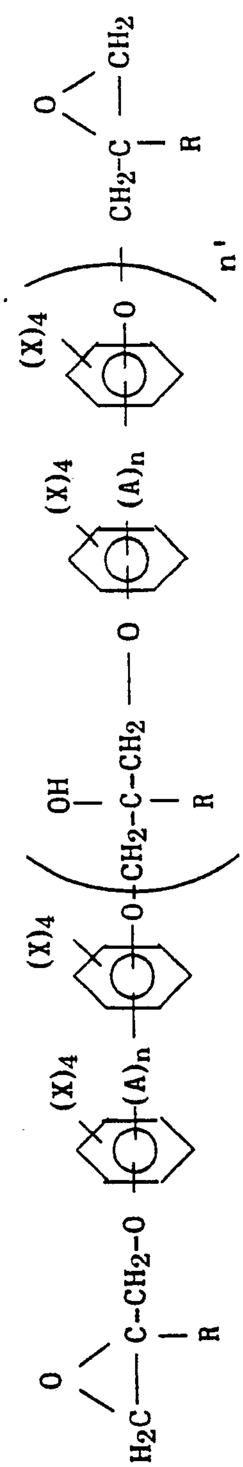

wherein each A is independently a divalent hydrocarbyl group having suitably from 1 to 12, more suitably from 1 to 6, most suitably from 1 to 4, carbon atoms, -O-, -S-, -S-S-, -SO-, $-SO_2-$, or -CO-; each R is independently hydrogen or an alkyl group having from 1 to 3 carbon atoms; each X is independently hydrogen, a hydrocarbyl or hydrocarbyloxy group having suitably from 1 to 12, more suitably from 1 to 6, most suitably from 1 to 4, carbon atoms or a halogen atom, preferably chlorine or bromine; n has a value of

zero or 1; and n′ has an average value suitably from zero to 25, more suitably from 0.01 to 15, most suitably from 0.1 to 8.

Particularly suitable are the diglycidyl ethers of bisphenols such as, for example, bisphenol A, bisphenol F, bisphenol K, bisphenol S and combinations thereof. Also suitable are the diglycidyl ethers of compounds having an average of more than 1 but not more than 2 aliphatic, cycloaliphatic or aromatic hydroxyl groups per molecule such as those represented by the following formulas III or IV

Formula III

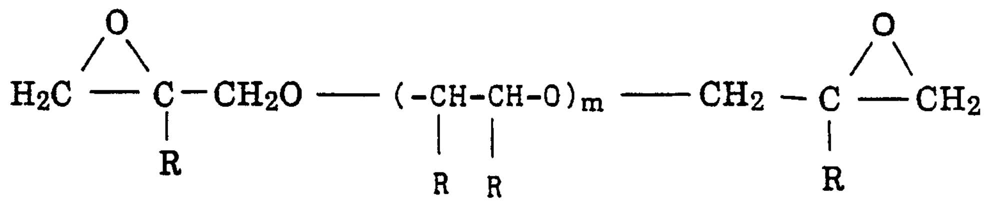

Formula IV

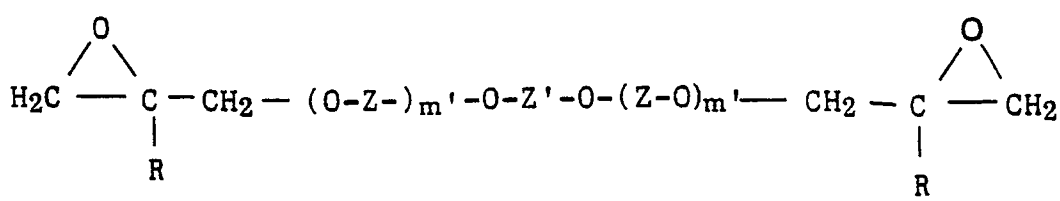

wherein each R is as previously defined; each Z is independently a $-CH_2-CHR''-$ group where R″ is hydrogen or an alkyl or substituted alkyl group having from 1 to 4 carbon atoms; and Z′ represents such divalent groups as those represented by the following formulas A, B, C, D, E, F, G, H or I:

FORMULA A

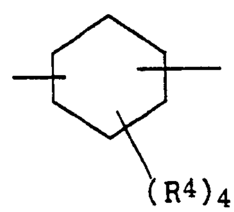

,

FORMULA B

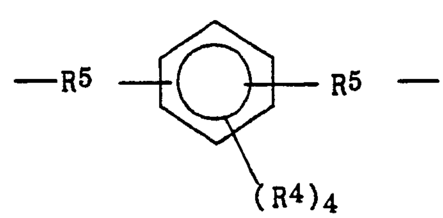

,

FORMULA C

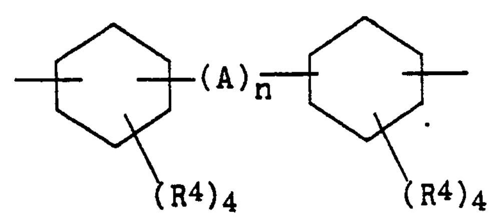

,

FORMULA D 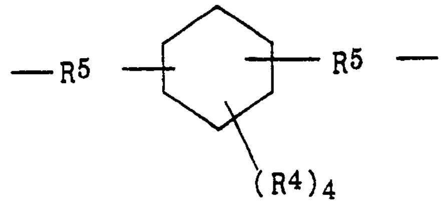 ,

FORMULA E 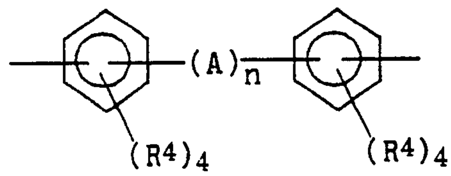 ,

FORMULA F 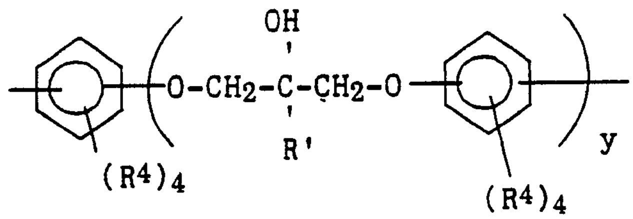 ,

FORMULA G

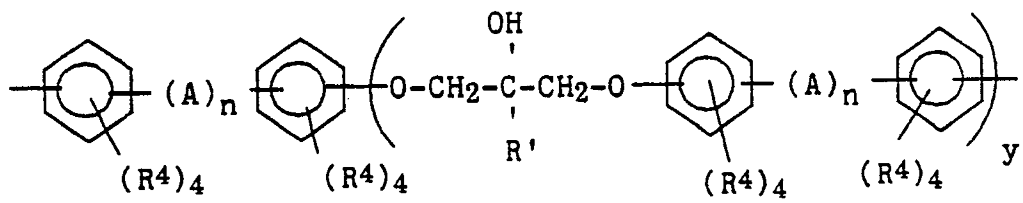 ,

FORMULA H 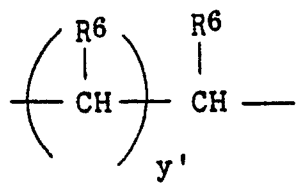 or

FORMULA I 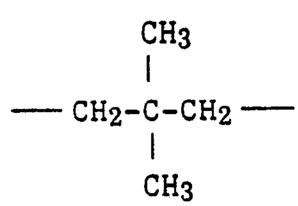

wherein each A is as previously defined; each R′ is independently hydrogen or an alkyl group having from 1 to 4 carbon atoms; each $R^4$ is independently hydrogen or a hydrocarbyl group having suitably from 1 to 12, more suitably from 1 to 6, most suitably from 1 to 4, carbon atoms; each $R^5$ is independently a divalent hydrocarbon group having from 1 to 6 carbon atoms; each $R^6$ is independently hydrogen or an alkyl group having from 1 to 6 carbon atoms; n has a value of zero or 1; m has an average value suitably from 1 to 20, more suitably from 1 to 10, most suitably from 1 to 6; each m′ independently has an average suitably from

1 to 10, more suitably from 1 to 5, most suitably from 1 to 3; y has an average value suitably from zero to 0.5, more suitably from 0.01 to 0.1, most suitably from 0.03 to 0.07; and y′ has a value suitably from 1 to 19, more suitably from 3 to 10, most suitably 5.

Suitable phenolic hydroxyl-containing compounds which can be employed herein include the phenols and bisphenols such as those represented by the following formulas V and VI

Formula V

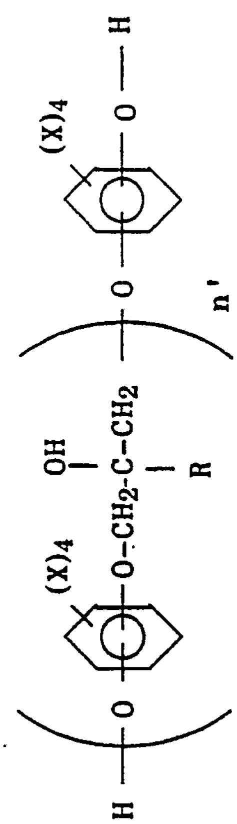

Formula VI

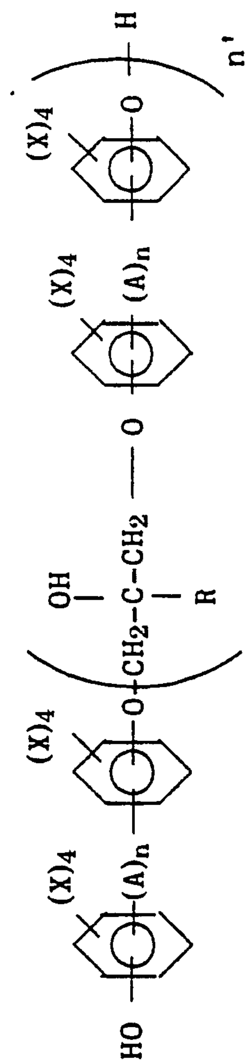

wherein A, R, X, n and n′ are as previously defined. Particularly suitable are the bisphenols such as, for example, bisphenol A, bisphenol F, bisphenol K, bisphenol S and combinations thereof.

The epoxy resin and the phenolic hydroxyl-containing compound can be employed in amounts which provide a ratio of phenolic hydroxyl groups to epoxy group suitably from 0.1:1 to 9:1, more suitably from 0.5:1 to 2:1, most suitably from 0.9:1 to 1.1:1. When the ratios are above or below those mentioned, the properties of the coatings are more nearly like those for low molecular weight epoxy resins.

Suitable converting resins which can be employed herein include, for example, phenol-aldehyde resole resins, urea-aldehyde resins, melamine-aldehyde resins, alkylolated urea-aldehyde resins, alkylolated melamine-aldehyde resins, allyl ethers of alkylolated phenols, blocked polyisocyanates and combinations thereof. Particularly suitable such converting resins include, for example, urea-formaldehyde resins, methylolated urea-formaldehyde resins, melamine-formaldehyde resins, methylolated melamine-formaldehyde resins, phenol-formaldehyde resole resins, and the like.

Also suitable as the converting compound are the di- and polyisocyanates and the blocked, particularly the ketoxime blocked di- and polyisocyanates. Particularly suitable such converting compounds include toluene diisocyanate, methylene diphenyl diisocyanate, methyl ethyl ketoxime blocked toluene diisocyanate, methyl ethyl ketoxime blocked methylene diphenyl diisocyanate and combinations thereof.

The term converting resin or compound means that it is a curing agent which is capable of curing a resin which contains a plurality of aliphatic hydroxyl groups.

The converting resin or compound is employed in amounts suitably from 5 to 50, more suitably from 10 to 40, most suitably from 15 to 30, percent by weight based upon the combined weight of the epoxy resin, the phenolic hydroxyl-containing compound and the converting resin. When less than 5 percent by weight converting resin is employed the coating will have insufficient crosslinking resulting in poor chemical resistance, poor solvent resistance, a lower glass transition temperature and unsuitable stain resistance. When more than 50 percent by weight converting resin is employed the coating will have too much crosslinking and will be overcured resulting in poor flexibility, unsuitable adhesion and brittleness.

Suitable catalysts or accelerators for the reaction between the converting resin and the aliphatic hydroxyl groups contained in the advanced epoxy resin resulting from the in situ advancement of the relatively low molecular weight epoxy resin and the phenolic hydroxyl-containing compound include, for example, inorganic acids such as, for example, phosphoric acid, phosphorous acid, sulfuric acid, sulfurous acid, nitric acid, nitrous acid, hydrochloric acid, and the like; organic acids having from 1 to 18 carbon atoms such as, for example, dodecyl benzene sulfonic acid, acetic acid, formic acid, propionic acid, octadecanoic acid, and the like; and phosphate ester resins such as those prepared by reacting an epoxy resin with phosphoric acid.

Suitable catalysts which can be employed when the converting compound is employed to react with the aforementioned aliphatic hydroxyl groups include, for example, metal carboxylates. Any compound which will catalyze the reaction between an aliphatic hydroxyl group and an isocyanate group is suitable for use as the catalyst. Particularly suitable metal carboxylates include, for example, dibutyl tin dilaurate, stannous octoate and combinations thereof.

The catalysts or accelerators are employed in an amount suitably from 0.001 to 10, more suitably from 0.05 to 5, most suitably from 0.5 to 1, percent by weight based upon the combined weight of the epoxy resin, the phenolic hydroxyl-containing compound, the converting resin, and the catalyst or accelerator.

Particularly suitable flow modifiers include the silicone resins, acrylic resins (acrylate polymers and copolymers), polyacetals, metal titanates, and the like. Particularly suitable silicone flow modifiers include, for example, BYK-361 silicone resin commercially available from BYK Chemie Company and SR-882 silicone resin commercially available from General Electric.

The flow modifiers are employed in an amount suitably from 0.005 to 2, more suitably from 0.01 to 1, most suitably from 0.05 to 0.5, percent by weight based upon the combined weight of the epoxy resin, the phenolic hydroxyl-containing compound, and the converting resin.

Suitable solvents which can be employed include, for example, ketones, glycol ethers, alcohols, esters, aromatic hydrocarbons, halogenated hydrocarbons and combinations thereof. Particularly suitable such solvents include, for example, methanol, ethanol, n-propanol, isopropanol, butanol, pentanol, hexanol, heptanol, octanol, nonanol, decanol, acetone, methyl ethyl ketone, methyl isobutyl ketone, toluene, xylene, benzene, methylene chloride, cyclohexanone, ethylene glycol n-butyl ether, ethylene glycol n-propyl ether, ethylene glycol ethyl ether ethylene glycol methyl ethyl ether and combinations thereof. The amount of solvent depends upon the amount required to achieve the desired application viscosity Usually from 25 to 55, more usually from 30 to 50, most usually from 35 to 45, percent of solvent by weight based upon the weight of the other components contained in the coating composition is sufficient.

The coating compositions can be prepared by blending the components which make up the composition at temperatures suitably from 10°C to 60°C, more suitably from 15°C to 40°C, most suitably from 20°C to 30°C.

Suitable substrates to which the coating composition of the present invention can be applied include, for example, metals, plastics, wood, glass, and the like.

The coating compositions of the present invention can be applied to the substrate by any suitable means such as, for example, brushing, dipping, spraying, drawing, roller coating and combinations thereof.

The coatings, once they have been applied to the desired substrate, can be cured by heating at a temperature suitably from 130°C to 350°C, more suitably from 170°C to 300°C, most suitably from 200°C to 280°C. The time depends upon the temperature, accelerator or catalyst level, substrate thickness and other factors; however, usually times of from 0.1 to 60, more usually from 0.2 to 20, most usually from 0.2 to 10, minutes are suitable. A thin substrate cured at 300°C usually requires 5 to 10 seconds whereas a cure at 130°C could require up to one hour to achieve an acceptable cure. Optimum cure conditions for

coil coating applications is 90 seconds at 280° C. Curing the coating outside the above mentioned range of temperatures and times usually results in either overbaking (overcuring) or underbaking (undercuring) the coating, which results in inferior coating properties, reduced adhesion, brittleness, loss of solvent and corrosion resistance and differences in hardness.

The coating compositions of the present invention are suitably employed as coil coatings, container coatings, automotive coatings, appliance coatings, and the like.

If desired, the coating compositions can also contain dyes, pigments, fillers, plasticizers stabilizers, surfactants and combinations thereof.

The present invention will be described in more details with reference to the following examples.

## EXAMPLES AND COMPARATIVE EXAMPLES

### Preparation of Bisphenol Capped Epoxy Resins

#### (A) Preparation of Bisphenol A capped Phenolic Resin having a phenolic hydroxyl equivalent weight of 955.

Into a suitable reaction vessel was weighed 230.0 grams (2.015 equivalents) of bisphenol A and 270.0 grams(1.489 equivalents) of diglycidyl ether of bisphenol A having a percent epoxide of 23.71 percent (181.36 epoxide equivalent weight, EEW). The stirred mixture was padded with nitrogen and heated at a rate of 2° C to 4° C per minute to 60° C and then 0.40 grams of 70 percent ethyltriphenyl phosphonium acetate in methanol was added. The mixture was heated to 180° C and held for 2 hours to react out all the epoxy resin. Then the mixture was cooled to 150° C and 250.0 grams of ethylene glycol n-butyl ether and 250.0 grams of cyclohexanone was added dropwise through an addition funnel and poured into a suitable container. The resultant product, designated as "Phenolic Resin A" has a phenolic hydroxyl equivalent weight (PHEW) of 955.

#### (B) Preparation of Bisphenol A capped Phenolic Resin having a phenolic hydroxyl equivalent weight of 525.

Into a suitable reaction vessel was weighed 884.1 g (7.75 equiv.) of bisphenol A and 815.9 g (4.52 equiv.) of diglycidyl ether of bisphenol A having a percent epoxide of 23.827 (180.47 epoxide equivalent weight, EEW). The stirred mixture was padded with nitrogen and heated at a rate of 2° C to 4° C per minute to 60° C and then 1.2 g of a 70 percent by weight solution of ethyltriphenyl phosphonium acetate•acetic acid complex in methanol was added. The mixture was heated to 180° C and held for two hours to react out all of the epoxy resin. Then the mixture was cooled to 150° C and 850 g of ethylene glycol n-butyl ether and 850 g of cyclohexanone was added dropwise through an addition funnel and poured into a suitable container. The resultant product, designated as "Phenolic Resin B" had a phenolic hydroxyl equivalent weight (PHEW) of 525.

### Preparation of Solvent Resin Blends

Various resins were blended with a 1/1 mixture by weight of ethylene glycol n-butyl ether/cyclohexanone to a level of 40 percent solids (non-volatiles). The samples were agitated overnight until dissolved. These resins, their EEW or PHEW and solution viscosities are given in the following Table I.

TABLE I

| RESINS | EEW | PHENOLIC OH Eq. Wt. | SOLUTION VISCOSITY FORD #4 CUP (sec at 40% solids) |
|---|---|---|---|
| Epoxy Resin A[a*] | 3,255 | --- | 636 |
| Epoxy Resin B[b*] | 1,780 | --- | 202 |
| Epoxy Resin C[c*] | 930 | --- | 86 |
| Epoxy Resin D[d*] | 545 | --- | 31 |
| Phenolic Resin A[e*] | --- | 955 | 156 |
| Phenolic Resin B[f*] | --- | 525 | 42 |
| 60% Epoxy Resin C[c,g] 40% Phenolic Resin A[e, g] | --- | --- | 98 |
| 40% Epoxy Resin D[d,g] 60% Phenolic Resin B[f, g] | --- | --- | 38 |

* Not an example of the present invention.

[a] Epoxy Resin A is a diglycidyl ether of bisphenol A available from The Dow Chemical Company as D.E.R.TM669E.

[b] Epoxy Resin A is a diglycidyl ether of bisphenol A available from The Dow Chemical Company as D.E.R.TM667.

[c] Epoxy Resin A is a diglycidyl ether of bisphenol A available from The Dow Chemical Company as D.E.R.TM664U.

[d] Epoxy Resin A is a diglycidyl ether of bisphenol A available from The Dow Chemical Company as D.E.R.TM661.

[e] Prepared in Step 1(A).

[f] Prepared in Step 1(B).

[g] Percentage is by weight.

Formulation of Varnishes Using METHYLONTM 75108 Resin (allyl ether of phenol resole resin).

Into separate 8 oz. (237 cc.) bottles were weighed 50.0 grams of each of the 40 percent solids resin solutions described in Step 2 (20.0 grams of resin). Into each of the bottles were weighed 5.88 grams of METHYLONTM 75108 (a mixture of allyl ethers of mono-, di- and tri-methylolphenol) resole resin (86 percent resin to give 5.06 grams of resin) available from General Electric. The samples were well mixed and then 0.30 grams of 85 percent Phosphoric acid and 0.25 grams of 10 percent BYK-361 acrylate copolymer available from BYK Chemie was added and stirred. This gave a varnish containing 20 percent METHYLONTM 75108 resole resin, 1 percent phosphoric acid accelerator and 0.1 percent BYK-361 acrylate copolymer flow modifier. Additional solvent blend of 1/1 cyclohexanone and ethylene glycol n-butyl ether was added to give a solution viscosity of Gardner D at room temperature (approximately 100 centistokes at 25 °C or 40 seconds on the FORD #4 cup viscosity). The amount of additional solvent was noted so that percent solids (non-volatiles) for each formulation could be determined. The varnish samples were aged for at least 24 hours before applying to the substrate. The results are given in Table II.

Formulation of Varnishes Using Urea/Formaldehyde Resin BECKAMINETM21-511

Into separate 8 oz. (237 cc.) bottles were weighed 50.0 grams of each of the 40 percent solids resin solutions described above (20.0 grams of resin). Into each of the bottles was weighed 3.73 grams of BECKAMINETM 21-511 urea/formaldehyde converting resin (60 percent resin to give 2.24 grams of resin) available from Reichhold Chemicals, Inc. The samples were well mixed and then 0.30 grams of 10 percent dodecylbenzene sulfonic acid in isopropanol and 0.22 grams of 10 percent BYK-361 silicone resin was added and stirred. This gave a varnish containing 10 percent BECKAMINETM 21-511 urea/formaldehyde resin, 0.5 percent dodecylbenzene sulfonic acid accelerator and 0.1 BYK-361 acrylate copolymer flow modifier. Additional solvent blend of 1/1 cyclohexanone and Ethylene glycol n-butyl ether was added to give

a solution viscosity of Gardner D at room temperature (approximately 100 centistokes at 25° C or 40 seconds on the FORD #4 cup viscosity). The amount of additional solvent was noted so that percent solids for each formulation could be determined. The varnish samples were aged for at least 24 hours before applying to the substrate. The results are given in Table III.

Procedure for Coating Substrates

Two different substrate types were tested. Tin free steel panels were the same substrate as that used for food can applications. These were obtained from Weirchrome Steel and known as Weirchrome treated tin-free steel. In addition, BONDERITETM 902 panels were also tested. All panels were rinsed with Aromatic 100 and baked at 400° F for 10 minutes to degrease.

Drawdowns were made using a (#12 wire wound rod according to a modified ASTM D4147-82 procedure. The panels were then baked in the oven at 400° F for 10 minutes to yield the appropriate dry film of 0.20 mils thickness.

Procedure for Measuring Film Thickness

Film thickness was determined using a Fisher Multi Fischerscope. The tester determined film thickness using magnetic properties of the substrate calibrated against standards on the bare substrate.

Procedure for Determining Methyl Ethyl Ketone Resistance (MEK double rubs)

MEK resistance was determined by rubbing the coating with a 2-pound ball-peen hammer that was wrapped with 8 plies of cheese cloth and saturated with MEK. No force was applied to the hammer other than that necessary to guide the hammer back and forth over the same area. A double rub consists of drawing the hammer back and forth from the original position. Testing continued until the coating marred. MEK resistance was related to the number of MEK double rubs. The MEK double rub requirement varies for different applications, however the NCCA ratings for epoxy coatings indicate that 25 MEK double rubs is adequate for most applications.

Procedure for Measuring T-Bend Flexibility

ASTM D4145-83 was used to measure T-Bend Flexibility. The edges of the panel were cut to leave a 2-inch (5.1 cm) specimen of uniform thickness. A bend was made in the panel approximately 0.75 inches (1.9 cm) from the end using a fingerbrake. The bent specimen was then placed in a vice, which was previously taped with plastic tape to prevent scratching the substrate, and the panel was bent back on itself for a 180 degree bend. The stressed area was than tested for adhesion by taping with Scotch 610 tape to assure that there were no air bubbles in the tape. The tape was then pulled with rapid and forceful fashion at a 90 degree angle in an attempt to pull the coating away from the substrate. Next, a solution of copper sulfate in 0.1 N hydrochloric acid was applied to the stressed area. The purpose of this step was to oxidize any resulting exposed bare metal in order to more accurately observe adhesive failures. The specimen was examined under a 30X powered microscope to determine failure. The first bend was noted as TO because there was no panel sandwiched between the bend. The process of bending the panel via the fingerbrake and vice was continued until there was no sign of cracking or adhesion loss. Each successive bend was noted as T1, T2, T3, T4, etc., because of the layers of panel sandwiched between plies. The lower the number of T-bends, the better the flexibility.

Procedure for Measuring Wedge Bend Flexibility

Another method for measuring the flexibility was by evaluating wedge bends by ASTM D3281-84. The panel was bent back on itself and then placed in a Gardner impact tester and hammered to form a wedge. The wedge bend was tested for adhesion by taping with Scotch 610 tape to assure that there was no air bubbles in the tape. The tape was then pulled with a rapid and forceful fashion at a 90 degree angle in an

attempt to pull the coating away from the substrate. Next, a solution of copper sulfate in 0.1 N hydrochloric acid was applied to the stressed area. The purpose of this step was to oxidize any resulting exposed bare metal in order to more accurately observe adhesive failures. The specimen was examined under a 30X powered microscope to determine failure. The length of the failure was then measured in millimeters and reported as an indication of coating flexibility.

Sterilization Studies With 2 Percent Acetic Acid/3 percent Salt

Sterilization studies were performed on the coating to determine the permeability of the coating to a solution of 2 percent acetic acid/3 percent sodium chloride with pressure and heat. The coated panels were impacted with a mandrel to cause a stressed area and scribed with an X using a razor blade. These prepared specimens were then placed in a jar containing the solution of 2 percent acetic acid and 3 percent sodium chloride. The jar was placed into an autoclave. The door was closed and pressurized to 250°F (121.1°C) at 15 psi (103.4 kPa) for 90 minutes. The clock was started only when both the desired temperature and pressure were reached. After the specimens were sterilized for the prescribed conditions, the heat was turned off, the pressure bled off and the panels were removed for testing within fifteen minutes of removal from the autoclave so that the data would not be skewed by the solution leaving the coating with time. The panels were blotted dry and the coating scribed again in the pre-stressed area. Both the pre-scribed and post-scribed areas were tested for adhesion by taping with Scotch 610 tape to assure that there was no air bubbles in the tape. The tape was then pulled with a rapid and forceful fashion at a 90 degree angle in an attempt to pull the coating away from the substrate. Next, a solution of copper sulfate in 0.1 N hydrochloric acid was applied to the stressed area. The purpose of this step was to oxidize any resulting exposed bare metal in order to more accurately observe adhesive failures. The coatings were rated in the following manner:

| RATING | DESCRIPTION |
|---|---|
| 5 | Total Loss of Adhesion |
| 4 | Gross Failure |
| 3 | Ticking Failure |
| 2 | Ticking |
| 1 | Slight Ticking |
| 0 | No Failure Detected |

This test was indicative of the adhesive properties needed in the can industry. Blush was determined by examining the panels after autoclaving and noting whether or not the coating had a tendency to cloud or whiten.

Procedure for Pasteurization Studies

Pasteurization studies were performed on the coating to determine the permeability of the coating to water with pressure and heat. The coated panels were impacted with a mandrel to cause a stressed area and scribed with an X using a razor blade. These prepared specimens were then placed in trays and put into the autoclave containing a pan filled with water. The door was closed and pressurized to 250°F (121.1°C) at 15 psi (103.4 kPa) for 90 minutes. The clock was started only when both the desired temperature and pressure were reached. After the specimens were pasteurized for the prescribed conditions, the heat was turned off, the pressure bled off and the panels were removed for testing within fifteen minutes of removal from the autoclave so that the data would not be skewed by the solution leaving the coating with time. The panels were blotted dry and the coating scribed again in the pre-stressed area. Both the pre-scribed and post-scribed areas were tested for adhesion by taping with Scotch 610 tape to assure that there was no air bubbles in the tape. The tape was then pulled with a rapid and forceful fashion at a 90 degree angle in an attempt to pull the coating away from the substrate. Next, a solution of copper sulfate in 0.1 N hydrochloric acid was applied to the stressed area. The purpose of this step was to oxidize any resulting exposed bare metal in order to more accurately observe adhesive failures. The coatings were rated in the following manner:

| RATING | DESCRIPTION |
|---|---|
| 5 | Total Loss of Adhesion |
| 4 | Gross Failure |
| 3 | Ticking Failure |
| 2 | Ticking |
| 1 | Slight Ticking |
| 0 | No Failure Detected |

Blush was determined by examining the panels after autoclaving (pasteurizing) and noting whether or not the coating had a tendency to cloud or whiten.

Procedure for Crystal Violet Stain Test

Stain resistance was determined on the cured coating by applying 1 drop of a solution of 0.1 percent crystal violet in diethylene glycol n-butyl ether. The drop was allowed to stand for a period of 60 seconds and then rinsed with isopropanol. Failure was denoted by observing the intensity of the resulting purple stain.

| RATING | DESCRIPTION |
|---|---|
| 5 | Very Dark Purple Stain |
| 4 | Dark Stain |
| 3 | Obvious Stain |
| 2 | Slight Stain Detected |
| 1 | Very Slight Stain Detected |
| 0 | No Staining Observed |

Procedure for Pencil Hardness

Pencil hardness was used to evaluate the hardness of the coating. ASTM Method D 3363-85 was used. Standard, calibrated pencils of varying degrees of hardness were used to mark the coatings at a 45 degree angle. The number of the pencil that did not mar the surface was noted as pencil hardness.

Glacial Acetic Acid Blush Test

Panels were immersed in glacial acetic acid for a period of 2 minutes and then rinsed with water and blotted dry. Blush was determined by examining the panels after autoclaving and noting whether or not the coating had a tendency to cloud or whiten.

Pencil Hardness After Immersion in Glacial Acetic Acid

Panels were immersed in glacial acetic acid for a period of 2 minutes and then rinsed with water and blotted dry. Pencil Hardness was then determined using ASTM Method D 3363-85.

TABLE II

IN SITU ADVANCEMENT STUDY WITH METHYLON™ 75108

| RESIN | EQUIV. WEIGHT | MELT VISC. @ 200°C | % SOLIDS FOR 0 VISC. | FILM THICK-NESS | MEK DR | T BEND | WEDGE BEND mm of failure | NaCl/HOAc BLUSH TEST |
|---|---|---|---|---|---|---|---|---|
| Epoxy Resin A* | 3255 | 23500 | 27.4 | 0.140<br>0.135 | 180 | 10.0 | 47 | PASS |
| Epoxy Resin B* | 1780 | 3900 | 34.0 | 0.175<br>0.179 | 95 | 5.5 | 46 | PASS |
| Epoxy Resin C* | 930 | 900 | 37.5 | 0.192<br>0.194 | 12 | 5.0 | 25 | PASS |
| Epoxy Resin D* | 545 | 200 | 45.1 | 0.236<br>0.227 | 3 | 10.0 | 14 | FAIL |
| Phenolic Resin A* | 955 | 1650 | 35.0 | 0.187<br>0.177 | 18 | 10.0 | 31 | Fail |
| Phenolic Resin B* | 525 | 250 | 44.2 | 0.226<br>0.232 | 12 | 10.0 | 21 | FAIL |
| 60% Epoxy Resin C<br>40% Phenolic Resin A | | 1250 | 36.5 | 0.183<br>0.184 | 145 | 4.5 | 28 | PASS |
| 40% Epoxy Resin D<br>60% Phenolic Resin B | | 220 | 44.8 | 0.224<br>0.226 | 70 | 4.5 | 10 | PASS |

*Not an example of the present invention.

TABLE II (CONTINUED)
IN SITU ADVANCEMENT STUDY WITH METHYLON™ 75108

| RESIN | ADHESION NaCl/HOAc | | WATER BLUSH TEST | ADHESION WATER | | CRYSTAL VIOLET STAIN TEST | GLACIAL HOAc BLUSH TEST | PENCIL HARDNESS | PENCIL HARDNESS AFTER HOAc |
|---|---|---|---|---|---|---|---|---|---|
| | PRE-SCRIBED | POST-SCRIBED | | PRE-SCRIBED | POST-SCRIBED | | | | |
| Epoxy Resin A* | 1 | 1 | PASS | 1 | 1 | 0 | PASS | 8H | 8H |
| Epoxy Resin B* | 1 | 1 | PASS | 1 | 1 | 2 | PASS | 8H | 6H |
| Epoxy Resin C* | 2 | 3 | PASS | 2 | 2 | 5 | PASS | 6H | <F |
| Epoxy Resin D* | 2 | 2 | FAIL | 2 | 3 | 5 | FAIL | 4H | <F |
| Phenolic Resin A* | 4 | 4 | FAIL | 4 | 4 | 3 | PASS | 8H | 6H |
| Phenolic Resin B* | 4 | 4 | FAIL | 4 | 4 | 5 | PASS | 8H | 5H |
| 60% Epoxy Resin C 40% Phenolic Resin A | 1 | 1 | PASS | 1 | 1 | 2 | PASS | 8H | 5H |
| 40% Epoxy Resin D 60% Phenolic Resin B | 1 | 1 | PASS | 1 | 1 | 3 | PASS | 7H | 4H |

*Not an example of the present invention.

TABLE III
IN SITU ADVANCEMENT STUDY WITH BECKAMINE™ 21-511

| RESIN | EQUIV. WEIGHT | MELT VISC. @ 200°C | % SOLIDS FOR 0 VISC. | FILM THICK-NESS | MEK DR | T BEND | WEDGE BEND mm of failure | NaCl/HOAc BLUSH TEST |
|---|---|---|---|---|---|---|---|---|
| Epoxy Resin A* | 3255 | 23500 | 26.1 | 0.171<br>0.159 | 50 | 5.0 | 16 | PASS |
| Epoxy Resin B* | 1780 | 3900 | 32.0 | 0.163<br>0.161 | 22 | 6.0 | 16 | PASS |
| Epoxy Resin C* | 930 | 900 | 36.1 | 0.162<br>0.163 | 5 | 9.0 | 38 | PASS |
| Epoxy Resin D* | 545 | 200 | 44.0 | 0.152<br>0.155 | 2 | 10.0 | 34 | FAIL |
| Phenolic Resin A* | 955 | 1650 | 32.0 | 0.188<br>0.177 | 5 | 10.0 | 21 | PASS |
| Phenolic Resin B* | 525 | 250 | 42.5 | 0.161<br>0.156 | 2 | 10.0 | 34 | FAIL |
| 60% Epoxy Resin C<br>40% Phenolic Resin A | | 1250 | 34.5 | 0.197<br>0.197 | 45 | 5.5 | 13 | PASS |
| 40% Epoxy Resin D<br>60% Phenolic Resin B | | 220 | 42.8 | 0.157<br>0.158 | 12 | 6.0 | 21 | PASS |

*Not an example of the present invention.

TABLE III (CONTINUED)
IN SITU ADVANCEMENT STUDY WITH BECKAMINE™ 21-511

| RESIN | ADHESION NaCl/HOAc | | WATER BLUSH TEST | ADHESION WATER | | CRYSTAL VIOLET STAIN TEST | GLACIAL HOAc BLUSH TEST | PENCIL HARDNESS | PENCIL HARDNESS AFTER HOAc |
|---|---|---|---|---|---|---|---|---|---|
| | PRE-SCRIBED | POST-SCRIBED | | PRE-SCRIBED | POST-SCRIBED | | | | |
| Epoxy Resin A* | 1 | 1 | PASS | 1 | 1 | 4 | PASS | 6H | 4H |
| Epoxy Resin B* | 1 | 1 | PASS | 1 | 1 | 4 | PASS | 6H | F |
| Epoxy Resin C* | 2 | 3 | FAIL | 2 | 2 | 5 | FAIL | 4H | GONE |
| Epoxy Resin D* | 2 | 2 | FAIL | 2 | 3 | 5 | FAIL | 4H | GONE |
| Phenolic Resin A* | 4 | 4 | FAIL | 4 | 4 | 5 | PASS | 7H | H |
| Phenolic Resin B* | 4 | 4 | FAIL | 4 | 4 | 5 | FAIL | 4H | GONE |
| 60% Epoxy Resin C 40% Phenolic Resin A | 1 | 1 | PASS | 1 | 1 | 5 | PASS | 8H | F |
| 40% Epoxy Resin D 60% Phenolic Resin B | 1 | 1 | PASS | 1 | 1 | 5 | PASS | 6H | F |

*Not an example of the present invention.

## Claims

1. A coating composition comprising
(A) at least one relatively low molecular weight epoxy resin having an average of more than one, but not more than 2 vicinal epoxide groups per molecule;
(B) at least one phenolic hydroxyl-containing compound having an average of more than one, but not more than two phenolic hydroxyl groups per molecule;
(C) at least one converting resin or compound;
(D) a catalyst for reacting the converting resin with the advanced epoxy resin which results when component (A) is reacted with component (B) upon heating the composition at a temperature of 130 °C and above; and
(E) at least one flow modifier; and
wherein components (A) and (B) are present in amounts which provide a ratio of phenolic hydroxyl groups to vicinal epoxide groups of from 0.1:1 to 9:1; and component (C) is present in an amount of from 5 to 50 percent by weight based upon the ccmbined weight of components (A), (B) and (C); component (D) is present in an amount of from 0.001 to 10 percent by weight based upon the combined weight of components (A), (B), (C) and (D); and component (E) is present in an amount of from 0.005 to 2 percent by weight based upon the combined weight of components (A), (B) and (C)

2. A coating composition of Claim 1, wherein component (A) is an epoxy resin represented by the following formulas I or II

Formula I

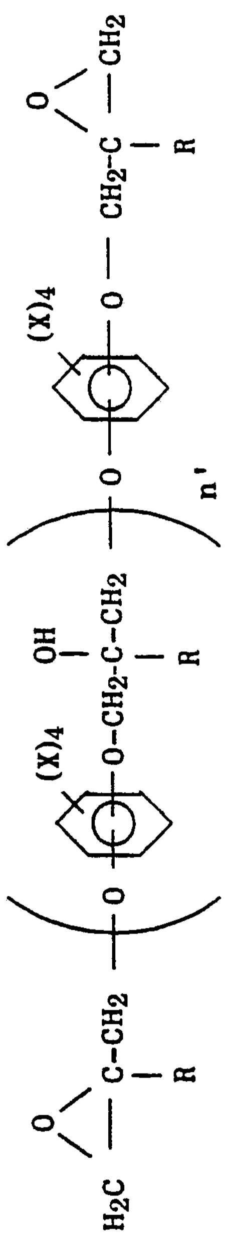

Formula II

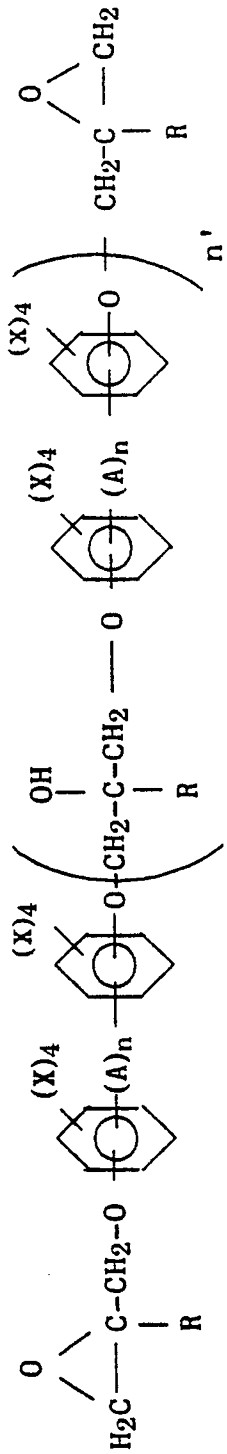

wherein each A is independently a divalent hydrocarbyl group having suitably from 1 to 12, carbon atoms, -O-, -S-, -S-S-, -SO-, $-SO_2-$, or -CO-; each R is independently hydrogen or an alkyl group having from 1 to 3 carbon atoms; each X is independently hydrogen, a hydrocarbyl or hydrocarbyloxy group having from 1 to 12 carbon atoms or a halogen atom; n has a value of zero or 1; and $n'$ has an average value from zero to 25.

3. A coating composition of Claim 1, wherein component (B) is a phenolic hydroxyl-containing compound represented by the following formulas V or VI

Formula V

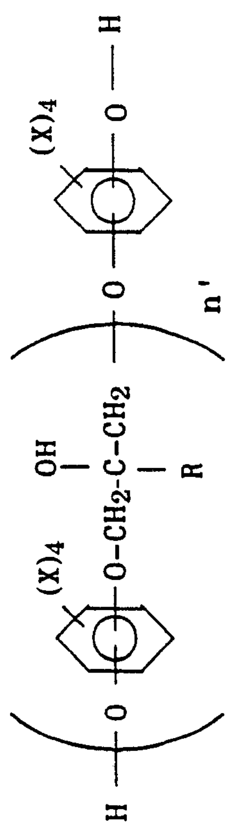

Formula VI

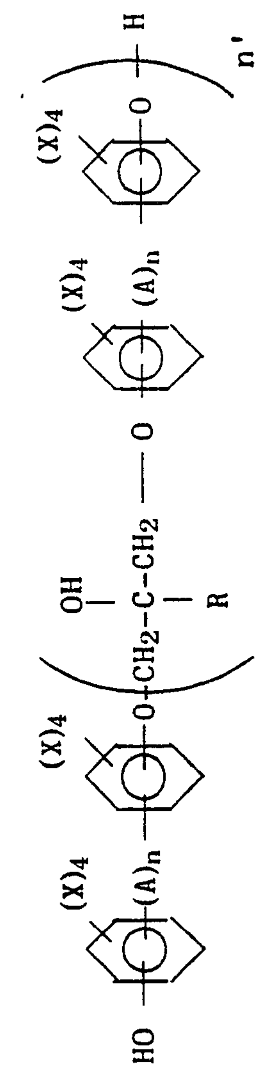

wherein each A is independently a divalent hydrocarbyl group having suitably from 1 to 12 carbon atoms, -O-, -S-, -S-S-, -SO-, $-SO_2-$, or -CO-; each R is independently hydrogen or an alkyl group having from 1 to 3 carbon atoms; each X is independently hydrogen, a hydrocarbyl or hydrocarbyloxy group having from 1 to 12 carbon atoms or a halogen atom, preferably chlorine or bromine: n has a value of zero or 1; and n′ has an average value from zero to 25.

4. A coating composition of Claim 1, wherein component (C) is selected from phenol-aldehyde resole resins, urea-aldehyde resins, melamine-aldehyde resins, alkylolated urea-aldehyde resins, alkylolated melamine-aldehyde resins, di- or polyisocyanates, blocked di- or polyisocyanates, or any combination thereof.

5. A coating composition of Claim 1, wherein the catalyst or accelerator is an inorganic acid, an organic acid having from 1 to 18 carbon atoms or a phosphate ester of an epoxy resin selected from the same group as component (A), a metal carboxylate or any combination thereof.

6. A coating composition of Claim 1, wherein component (D) is an inorganic acid.

7. A coating composition of Claim 1, wherein component (E) is a silicone resin.

8. A coating composition of Claim 6, wherein component (D) is phosphoric acid, dibutyl tin dilaurate, stannous octoate, or any combination thereof.

9. A coating composition of Claim 1, wherein

(a) component (A) is a diglycidyl ether of bisphenol A;

(b) component (B) is bisphenol A;

(c) component (C) is methylolated urea-formaldehyde resins, methylolated melamine-formaldehyde resins, phenol-formaldehyde resole resins, allyl ether of methylolated phenol, toluene diisocyanate, methylene diphenyl diisocyanate, methyl ethyl ketoxime blocked toluene diisocyanate, methyl ethyl ketoxime blocked methylene diphenyl diisocyanate, or any combination thereof;

(d) component (D) is phosphoric acid, dibutyl tin dilaurate, stannous octoate, or any combination thereof;

(e) component (E) is a silicone resin.

10. A method for applying to substrates coating compositions comprising (i) at least one relatively high molecular weight epoxy resin; and (ii) at least one aliphatic hydroxyl-containing converting resin to substrates which method comprises

(I) applying to the surface of a substrate, one or more applications of a composition of Claim 1.